# EUROPEAN PATENT SPECIFICATION

(11) **EP 0 705 422 B1**
(45) Date of publication and mention of the grant of the patent: **03.02.1999**
(21) Application number: 94919525.9
(22) Date of filing: 16.06.1994
(51) Int. Cl.: G01H 1/00

(54) **CONTINUOUS MONITORING OF REINFORCEMENTS IN STRUCTURES**
KONTINUIERLICHES ÜBERWACHEN VON BEWEHRUNGEN IN STRUKTUREN
SYSTEME DE CONTROLE PERMANENT DES ARMATURES D'UNE STRUCTURE

(30) Priority: 25.06.1993 US 81878
(43) Date of publication of application: 10.04.1996
(73) Proprietor: PURE TECHNOLOGIES Inc., Calgary, Alberta, T2R 1L5 (CA)
(72) Inventor: Paulson, Peter O., Calgary, Alberta T2V 4M7 (CA)
(74) Representative: W.P. Thompson & Co.
(86) International application number: CA9400335
(87) International publication number: WO9500823

(56) References cited:
- WO-A-82/00893
- US-A- 4 408 285
- US-A- 4 609 994
- STRAIN, July 1969, NEWCASTLE-UPON-TYNE, UK pages 152 - 156 M.A.MUSPRATT 'Strain measurement in reinforced concrete slabs'
- CORROSION, vol.40, no.7, July 1984, HOUSTON, USA S.E.DUNN ET AL 'Acoustic emission chatacterization of corrosion induced damage in reinforced concrete'
- PATENT ABSTRACTS OF JAPAN vol. 11, no. 216 (P-595) 14 July 1987 & JP,A,62 034 051 (TOKYU CONSTR. CO LTD) 14 February 1987
- PATENT ABSTRACTS OF JAPAN vol. 7, no. 216 (P-225) 24 September 1983 & JP,A,58 108 419 (TOKYO SHIBAURA DENKI KK) 28 June 1983

## Description

### Field of the Invention

The present invention is directed toward systems for monitoring the integrity of a structure and, in particular, toward a system for monitoring the breakage of structural reinforcements such as post-tensioning cables in concrete.

### Background of the Invention

One method of strengthening concrete structures such as bridges or concrete floors of modern buildings employs highly tensioned cables which are extended through conduits embedded in the concrete. Post-tensioning cables sometimes corrode and break, thereby impairing the integrity of the structure. Often these broken cables remain undetected. The monitoring of these inaccessible structural reinforcements to measure their integrity has long been a problem. Conventionally, the cables are visually inspected involving drilling a view port into the concrete at each cable location. Visual or electrical inspection of the cable is then performed to determine if the cable is still bearing load.

A monitoring system is proposed for the reinforcing elements of a structure and which is non-destructive and may be performed on a continuous basis by use of acoustic or seismic indicators. When a tensioned reinforcement within a structure breaks, energy, specifically in the form of acoustic and seismic energy, is released into the surroundings. Appropriate detectors responsive to these forms of energy may be positioned on or near the structure to detect the energy emissions. While monitoring structural anomalies through energy release has been used in the prior art, such systems and apparatus are often complex requiring the predetermined positioning of detectors on the cable or structure and complex manipulation of data to determine energy rate and determination of significant energy discharge.

International application no. WO 82/00893 of Crostack teaches a method for localising and analyzing sound emissions, wherein the post of the sound emitting source is determined by the arrival of the sound pulse at different measuring locations.

Japanese publication JP 6203405 of Toshihiko teaches a method for measuring acoustic emissions in a reinforced concrete structure. The method includes mounting sensors on the reinforcing bars of the concrete structure and measuring the arrival times of concrete destruction sounds at the sensors.

U.S. Patent 4,408,285 of Sisson et al. teaches an apparatus and method for carrying out vibrational analysis wherein the output of a vibrational monitoring transducer is treated by filtering in stepped fashion over a broad spectrum of frequencies.

U.S. Patent 4,609,994 of Bassim et al. teaches an apparatus for monitoring of acoustic emissions including a plurality of detector analyzer units coupled to a central control unit via a communications link.

### Summary of the Invention

According to a broad aspect of the present invention there is provided a method for monitoring a structure for failure of reinforcements in the structure, wherein signals due to failure of reinforcements, and the time of their arrival at a plurality of measuring positions disposed about the structure, are detected and analyzed to determine the nature and location of their origin, the method including monitoring the structure by detecting acoustic and/or seismic signals at three measuring positions, analyzing the spectrum of the signals above a predetermined minimum frequency, and whereby, knowing the relative position of each measuring position on the structure and determining that a spectral density spanning a few kilohertz exists above said predetermined minimum frequency for a limited predetermined period of time in contradistinction to a background spectral density at frequencies below said minimum frequency.

### Brief Description of the Drawings

For a better understanding of the present invention, reference may be made by way of example to the following diagrammatic drawings in which:
Figure 1 is a graph showing the acoustic activity of a structure during the failure of a tensioned reinforcing member;
Figure 2 is a plan view of an apparatus of the present invention; and,
Figures 3A and 3B are graphic illustrations of the method to determine the origin of a failure.

### Detailed Description of the Present Invention

While the present invention is described using, as an exemplary embodiment, the monitoring of post-tensioning cables in a concrete structure, the invention can equally be applied to monitoring other tensioned structural reinforcements or securing members where, for example, the reinforcements or securing members are subject to breakage and the velocity of sound in the structural material can be determined. Thus the present invention may be used to monitor structures including suspension bridge wires; mine hoists; rivets or skin in airplanes; bolted structures; bonded cables in bridges; ship hulls and bulkhead; bolted structures such as cranes or towers; bonded cables cast adhesively in concrete; anchoring cables; tie-backs and bank vaults. It can also be used to monitor underground structures such as mines or subway tunnels for acoustic events indicating rockbursts or potential cave-ins.

The system for monitoring the breakage of tensioning cables in a structure comprises positioning a plurality of detectors in a known arrangement about the structure and in close proximity to the structure or else in the structure, collecting the signals from the detectors and recognizing the signals relating to reinforcement failure.

There are preferably three or more detectors positioned about the structure. Three detectors allow the origin of energy emissions to be located quickly without employing an excessive number of detectors. As opposed to the prior art, the detectors may be randomly positioned on or about the structure provided that the arrangement is known, that is, the relative position of each detector on the structure is known. Knowing the arrangement of detectors is useful in determining the location of a break as will be discussed in more detail hereinafter.

The detectors are responsive to acoustic energy and/or seismic energy. Suitable detectors for use in the present invention include piezoelectric transducers, capacitive transducers, accelerometers, microphones of all types, inductive systems such as geophones, audio-acoustic transducers, acousto-optical transducers, magnetic inductive devices or optical devices. Many of the detectors respond only to one of acoustic energy or seismic energy. However, a piezoelectric transducer responds to both. Most accelerometers do not respond well to acoustic emissions but do respond to seismic emissions. Accelerometers may be linked to diaphragms to increase their acoustic sensitivity. Optical detective devices such as acousto-optical transducers or optical accelerometers use a wide variety of methods to convert strain or stress into a change in the optical properties of a device, including the use of fibre optics or intensity variations. Optical devices can be sensitive to both acoustic and seismic emissions. An example of a suitable detector is the Lars™ 100 interferometer of Gradient Lens Corp.

The detectors are positioned in close proximity to the structure and preferably in contact with the structure. The detectors can be embedded in the structure if desired for example by embedding them in a mine wall or in the concrete of a bridge or floor slab. However, to enhance the usefulness and simplicity of the apparatus, it is preferred that the detectors remain on the surface of the structure in close proximity to the structure and in contact with the surrounding air. In this way the detectors may detect air-borne acoustic energy as well as structure-borne acoustic energy arising from the event to be detected, such as a cable failure. However, because of the slow velocity of air-borne acoustic emissions when compared to those of structure-borne and seismic emissions, air-borne acoustic energy is not of particular interest in the practise of the present invention. As an example, the velocity of air-borne acoustic energy is 300 m/s while acoustic and seismic concrete-borne energy pressure wave and shear wave velocities are approximately 5000 m/s and 2300 m/s, respectively. The compression of concrete may cause variances in the velocities, so tests should be carried out to determine the acoustic and/or seismic velocity (depending on which is used in the particular installation) in the concrete of the structure if the velocity information is to be used to locate the site of the failure.

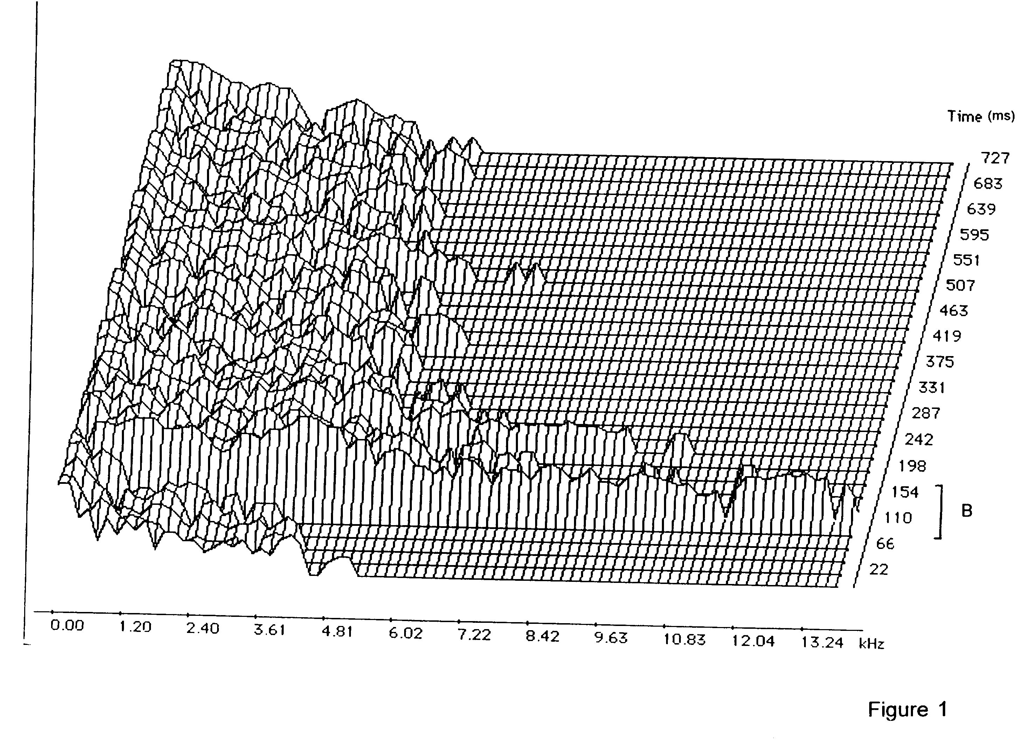

In response to the detection of an energy wave each detector produces a signal. The detectors may collect the signal data independently, on some appropriate collecting means such as magnetic tapes, until the information is required. When required, the collected data is analyzed to recognize a signal relating to reinforcement failure. Alternatively and more preferably, the detectors may be coupled to a central monitoring means allowing continuous monitoring of the detectors. The central monitoring means then acts as the collecting means and the means for recognizing a signal relating to failure. The central monitoring unit is preferably a microprocessor which allows instantaneous collection and analysis of breakage signals. The central monitoring means is able to recognize a signal relating to breakage in the structure by examining the pattern of energy frequency and/or amplitude emissions. Specifically, as is shown in graphical form in Figure 1, the frequency and amplitude of a cable break, indicated at B, are easily distinguished from the corresponding characteristics of background energy. Signal data such as that shown in Figure 1 may be used to create a recognition window for identification of energy released during a failure. To enhance the system a filter may be used which is based on the recognition window to remove background energy and clearly identify significant signals. In the filter, a continuous flow of signals from the sensors is interrupted by an event deemed significant. This trigger of an interrupting event allows the capture of pre- and post-trigger information. The trigger therefore must be somewhat selective. The filter may be of hardware or software as is known. For example, a band pass filter such as is used for audio mixing may be used.

While the recognizing means has been described as a mechanical or electrical device, it is to be understood that signals related to failure could also be recognised by visual inspection by an operator, continuously or by studying stored signal data.

The central monitoring means can further comprise a testing mode. The testing mode is useable to test the system periodically, ensuring the functionality of each of the detectors and the system as a whole.

Additionally, the central monitoring means can comprise a means for analyzing the energy levels detected over a period of time to offer forecast information for reinforcement failure.

A timing means can also be incorporated into the system to record the relative time at which an energy emission reaches each detector. The arrival times recorded at each detector are useful for locating a triggering event, such as a tension cable failure. The difference in time at which the energy reaches each of the detectors can be used for triangulation as is known. Timing means may be set up independently on each detector and synchronized, or preferably set up centrally through the microprocessor. When the timing means is set up centrally, it can be assumed, in most cases, that the signals pass instantaneously from the detector to the microprocessor. Any delay in transmission is not significant if the longest lengths of conductor from detector to microprocessor are less than 1000 m. The velocity of electricity is 10⁸ m/sec and therefore any delay would be at most 10⁻⁵ sec. As an example, in the preferred embodiment the detectors would be within 100m of each other. Therefore, errors of uncertainty of arrival would be caused by a length uncertainty of 100 m. It follows then that the location error produced by transmission delay in concrete would be 0.225 cm. Where the detectors are long distances apart, such as in the monitoring of suspension bridges, the delay in transmission should be taken into account when calculating the cable break.

If the detectors are monitored by the microprocessor, the analysis of timing patterns may be carried out immediately and continuously. The microprocessor is provided with a form of output to report failures. The output may be provided on a continuous basis as by, for example, a computer monitor. Alternatively, output may be provided by the microprocessor only on request.

To enhance the usefulness of the system the detectors are preferably responsive to both acoustic and seismic energy. When such detectors are used, the time of arrival of energy of both forms may be recorded independently and compared to pin-point the origin. As mentioned hereinbefore, the detectors can also be positioned to be responsive to air-borne acoustic energy. The time of detection of air-borne acoustic energy can be combined with arrival times of structure-borne acoustic or seismic energy to determine or verify origin. Employing detectors which are responsive to more than one form of energy is beneficial in finding origin as well as recognizing a cable failure at times when there is excessive background noise in one of the energy forms. If there should be excessive background noise in one energy form, the other forms may be used to provide signals which are not distorted.

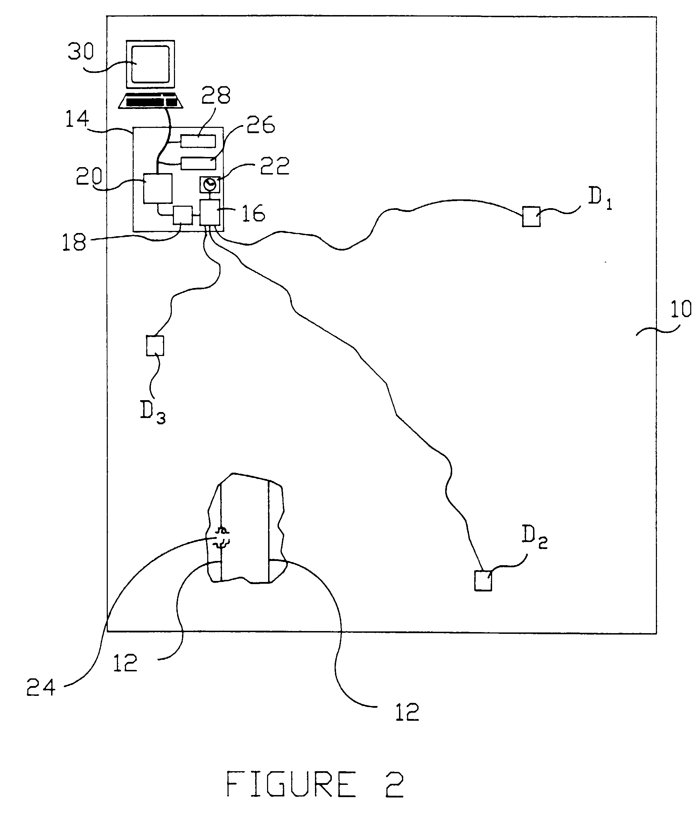

To explain the functioning of the preferred apparatus reference is made to Figure 2 in which three detectors D₁, D₂, D₃ have been randomly and conveniently placed on a concrete slab 10 having post-tensioning cables 12 running therethrough as shown in the cut away region of slab 10. The relative location of each detector on the slab has been measured and recorded. In the illustrated embodiment, the detectors are responsive to both seismic and acoustic energy and are connected to a microprocessor-based central monitoring means generally indicated at 14. Central monitoring means 14 includes means 16 to collect signals from the detectors D₁, D₂, D₃. As the signals are collected, a filter 18 in the microprocessor recognizes signals which are deemed to be significant based on a previously established recognition window. A signal which is significant is recognized and recorded, as shown at 20, as being related to a failure. Clock means 22 records the time of arrival of the signal.

Some useful parameters which can be used to identify significant signals are: the slope of incoming signal threshold; the amplitude of incoming signal threshold; the frequency distribution of incoming signal threshold; the duration of incoming signal threshold; and, the volume of incoming signal threshold. If the event produces effects which exceed predetermined values in one or more of these criteria, the event is recorded and flagged for examination. Examination can be performed by manual visual inspection or automatically by the computer. If it is done automatically, a suspected failure is declared when certain of the criteria mentioned exceed predetermined levels. Although it is possible to calculate the approximate maxima based on the expected energy release from a failure, it is not necessary to do so. Instead, it is possible merely to monitor base or background signals for a period of time and then set arbitrary levels well outside as denoting a probable failure event. For example, any signal having an amplitude or slope more than double the base level, or a frequency distribution having a markedly higher level of high frequency could be selected. Another way of testing for failures is to define as a probable failure event, only those events which cause effects beyond a predetermined level in both the acoustic and seismic waves, it being recognized that failure events will cause changes in both seismic and acoustic transmissions.

To determine the origin of the failure, the defining times of arrival of the energy as determined at 22 are recorded for each detector accurate to within one millisecond. The system compares the relative time of arrival of the acoustic and/or seismic energy at each detector and through triangulation determines the origin of the failure 24. In the preferred embodiment, the microprocessor also comprises a statistical analysis means 26 to analyze the signals and provide a basis for forecasts of future failure events based on previously collected signal data. The microprocessor also periodically tests the functioning of the detectors and the system as a whole at 28. The background signals coming continuously from each sensor should remain in a certain range. This evaluation can be made by the system and an error message can be generated if the signals depart from the expected range. Alternately, a synthesized event can be induced into an area being monitored to evaluate the system by determining if it registers the waves arising from the event. In the preferred embodiment, continuous output from the central monitoring means is supplied to a monitor 30.

### Example 1

In a particular embodiment of the invention three piezoelectric detectors, model 273-065A, manufactured by the Archer Company were placed on the surface of a 30 m x 15 m slab of 20 cm thick concrete which formed one floor of a parking garage in Lethbridge, Alberta. The floor had been reinforced with post-tensioned steel cables. The detectors were identified as A, B and C, and were placed in a triangular array. A microprocessor was connected by conventional wiring to the three detectors. The detectors were arranged to record seismic waves passing through the concrete floor. The garage, which was slated for demolition, was known to have reinforcing cables in an advanced state of corrosion. One such cable was exposed, and breakage was induced. Figure 1 is a Fourier Transform graph showing this breakage. The ordinate of the graph shows time after commencement of recording (in milliseconds) and the abscissa shows acoustic waves recorded in kHertz. The vertical direction shows the amplitude of each wave recorded in millivolts. The graph records the output of detector A. It will be evident that, prior to 88 milliseconds, waves of relatively low amplitude and wavelengths of under about 7 kHz were recorded. These represent background events, such as traffic passing, movement within the parking garage, etc. At 88 milliseconds, the induced cable breakage was detected. This caused acoustic waves to be generated at wavelengths as high as 13.24 kHz, as well as causing much greater amplitudes then previously seen of waves at lower wavelengths. Higher than normal frequencies occurred until approximately 160 milliseconds on the measuring scale, and background events after the breakage exhibited higher amplitudes than those background events occurring prior to the breakage due to the loss of integrity within the structure. Similar patterns were recorded by detectors B and C.

### Example 2

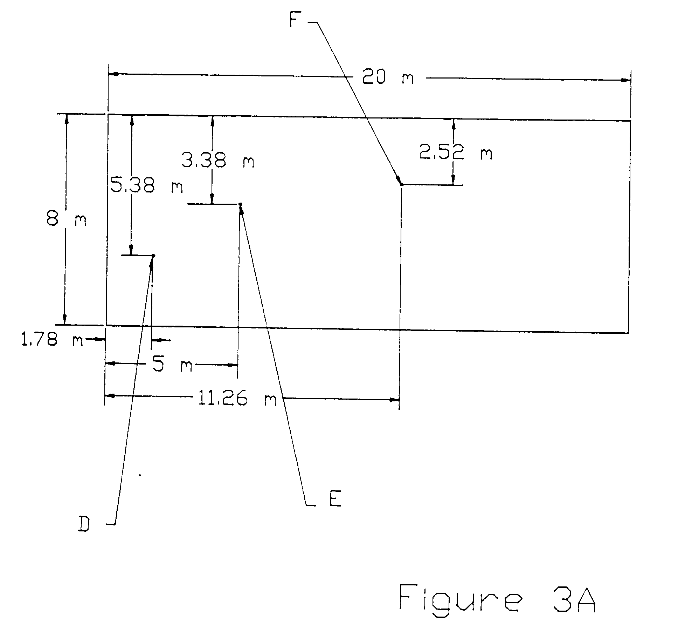

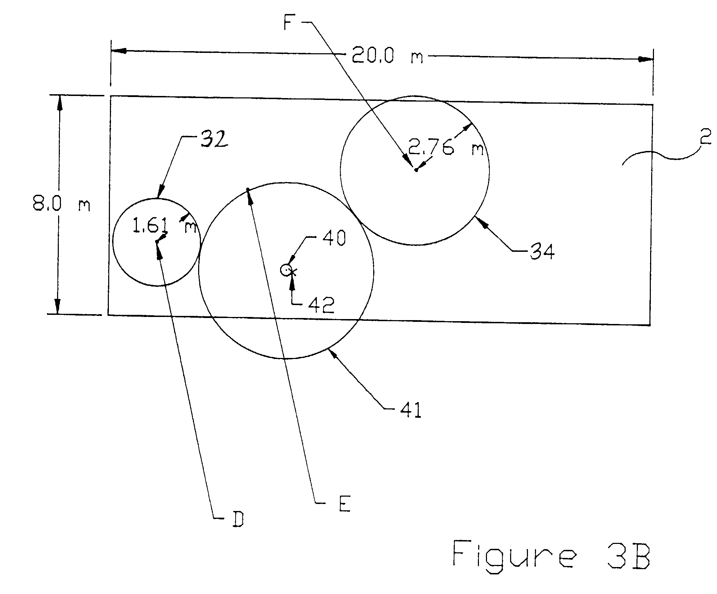

Referring to Figures 3A and 3B, in a second example, directed to demonstrating the origin of failure locating embodiment of the invention, a failure event was simulated by dropping a 1 kg weight from a height of 30 cm. onto a randomly selected location 40 on a concrete slab floor of an office building in Calgary, Alberta. The floor measured 8.0 m x 20.0 m and had three piezoelectric detectors, of the type used in Example 1 identified as D, E and F, located as shown in Figure 3A. The initial burst of high amplitude and high frequency waves following the simulated failure was found to arrive at detector E first. The waves arrived at detector D 0.7 ms later and then at detector F 1.2 ms after the first waves had reached detector E. With reference to FIGURE 3B, the known locations of the detectors and the relative differences in arrival times may be used to find the location of the break. While mathematical methods may be used as is known, the generation of a graph as in FIGURE 3B is preferred. To locate origin, the locations of sensors D, E and F are plotted on a graph representative of the slab. Using the relative arrival time delays and the velocity of the seismic energy through the structure (found to be 2400 m/s), the comparative distances from origin when compared to detector E are determined as follows:
Sensor D delay = 0.7ms
   Additional distance from origin as compared to sensor E
   = 0.7 ms x 2400 m/s
   = 1.61 m and,
Sensor F delay = 1.2 ms
   Additional distance from origin as compared to sensor E
   = 1.2 ms x 2400 m/s = 2.76 m.
These distance values are used as radii for the drafting of circles about their respective sensor as is shown at 32 and 34. A circle 41 is then drawn to intersect sensor E and to contact both circle 32 about sensor D and circle 34 about sensor F. In this way the origin is determined to be the centre 42 of circle 41. The actual origin was in this embodiment found to be as indicated at 40. This was of course known, as the breakage had been induced. The actual origin compared very closely with the calculated origin, indicating an error of 0.23 m.

While the above embodiment was shown using only seismic detection, both seismic and acoustic detection may be used. Where both forms are used only two detectors may be used to locate origin. Reflections of energy may also be used to pin-point origin, however this requires precise locating of reflective structures. Further, while the arrival of the first wave pattern is clearly recognized reflective wave patterns are very complex.

It will be understood that the foregoing description of the invention is by way of example only, and variations will be evident to those skilled in the art without departing from the scope of the invention, which is as set out in the appended claims.

## Claims

1. A method for monitoring a structure (10) for failure (24) of reinforcements (12) in the structure (10), wherein signals due to failure of reinforcements (12), and the time of their arrival at a plurality of measuring positions (D₁, D₂, D₃) disposed about the structure (10), are detected and analyzed to determine the nature and location of their origin, the method including monitoring the structure (10) by detecting acoustic and/or seismic signals at three measuring positions (D₁, D₂, D₃) and analyzing the spectrum of the signals above a predetermined minimum frequency, and characterized by, knowing the relative position of each measuring position (D₁, D₂, D₃) on the structure (10) and determining that a spectral density spanning a few kilohertz exists above said predetermined minimum frequency for a limited predetermined period of time in contradistinction to a background spectral density at frequencies below said minimum frequency.

2. The method as claimed in claim 1, further characterized by converting said signals to their Fourier transform to recognize their spectral densities.

3. The method as claimed in claim 2, further comprising recording a time of arrival for the energy at detectors located at the measuring positions (D₁, D₂, D₃).

4. The method as claimed in claim 3, further comprising testing the detectors periodically to ensure functionality.

5. The method as claimed in claim 4, further comprising analyzing signal data relating to failure occurrences over a period of time to provide statistical information useful for forecasting future failures.

## Patentansprüche

1. Verfahren zum Überwachen eines Aufbaus (10) auf ein Versagen (24) von Verstärkungen (12) im Aufbau (10), bei dem Signale infolge eines Versagens von Verstärkungen (12) und der Zeit ihres Eintritts an einer Vielzahl um den Aufbau (10) herum angeordneten Meßplatzen (D₁, D₂, D₃) erfaßt und analysiert werden, um die Art und den Ort ihres Ursprungs zu bestimmen, wobei das Verfahren das Überwachen des Aufbaus (10) durch Erfassen akustischer und/oder seismischer Signale an drei Meßplätzen (D₁, D₂, D₃) und Analysieren des Spektrums der Signale Über einer vorbestimmten Mindestfrequenz einschließt, und gekennzeichnet durch Kenntnis der relativen Position jeden Meßplatzes (D₁, D₂, D₃) am Aufbau (10) und Bestimmen, daß im Gegensatz zu einer spektralen Hintergrunddichte bei Frequenzen unterhalb der Mindestfrequenz für eine begrenzte vorbestimmte Zeitdauer eine spektrale Dichte, die sich über einige Kilohertz erstreckt, Über der vorbestimmten Mindestfrequenz vorhanden ist.

2. Verfahren nach Anspruch 1, weiterhin gekennzeichnet durch Umwandeln der Signale in ihre Fourier-Transformierte, um ihre spektralen Dichten zu erkennen.

3. Verfahren nach Anspruch 2, das weiterhin das Aufzeichnen einer Eintrittszeit für die Energie an Detektoren umfaßt, die sich an den Meßplätzen (D₁, D₂, D₃) befinden.

4. Verfahren nach Anspruch 3, das weiterhin das periodische Prüfen der Detektoren umfaßt, um eine Funktionalität sicherzustellen.

5. Verfahren nach Anspruch 4, das weiterhin das Analysieren von signaldaten umfaßt, die sich auf Versagensvorfälle über eine Zeitdauer beziehen, um zu Voraussagen von zukünftigen Versagens fallen nützliche statistische Information zu liefern.

## Revendications

1. Procédé de contrôle d'une structure (10) pour détecter une défaillance (24) d'armatures (12) dans la structure (10), dans lequel des signaux résultant d'une défaillance d'armatures (12) et l'instant de leur arrivée à une pluralité de positions de mesure (D₁,D₂,D₃) disposées près de la structure (10) sont détectés et analysés pour déterminer la nature et la position de leur origine, le procédé incluant le contrôle de la structure (10) par détection de signaux acoustiques et/ou sismiques à trois positions de mesure (D₁, D₂,D₃) et analyse du spectre des signaux au-dessus d'une fréquence minimale prédéterminée, caractérisé en ce que, connaissant la position relative de chaque position de mesure (D₁,D₂,D₃) sur la structure (10), on détermine qu'une densité spectrale s'étendant sur quelques kilohertz existe au-dessus de ladite fréquence minimale prédéterminée pendant un laps de temps prédéterminé limité, par opposition à une densité spectrale de fond à des fréquences inférieures à ladite fréquence minimale.

2. Procédé selon la revendication 1, caractérisé en outre en ce qu'on convertit lesdits signaux en leur transformée de Fourier pour reconnaître leurs densités spectrales.

3. Procédé selon la revendication 2, comprenant en outre l'enregistrement d'un instant d'arrivée de l'énergie à des détecteurs placés aux positions de mesure (D₁,D₂, D₃).

4. Procédé selon la revendication 3, comprenant en outre l'essai périodique des détecteurs pour vérifier leur bon fonctionnement.

5. Procédé selon la revendication 4, comprenant en outre l'analyse des données de signal relatives à des apparitions de défaillancesau cours d'une certaine période, afin de fournir des informations statistiques utiles pour la prévision de défaillances futures.
